# EUROPEAN PATENT APPLICATION

(11) **EP 3 812 337 A1**
(43) Date of publication of application: **28.04.2021**
(21) Application number: 19205279.3
(22) Date of filing: 25.10.2019
(51) Int. Cl.: B66C 23/20, B66C 13/54, B66B 9/187, E04G 5/04, E04H 12/34, F03D 13/10, B66C 23/18

(54) **TOWER SYSTEM FOR PERFORMING WORK ON AN ELONGATED STRUCTURE**

(71) Applicant: S&L Access Systems AB, 721 32 Västerås (SE)
(72) Inventor: Strandberg, Michael, SE-723 50 Västerås (SE); Lundberg, Kenneth, SE-723 50 Västerås (SE)
(74) Representative: Swea IP Law AB

(57) **Abstract**

The present invention relates to a tower system (1) and a method for erecting the tower system (1). The tower system (1) being for performing work on an elongated structure (2). The system comprises tower segments (3), to be stacked to form an elongated vertical tower (4), a base frame (5), arranged to stack tower segments (3) from below, a jib (6) in a top part (4a) of the vertical tower (4), a lift cage (7), for transporting people, a securing assembly (8) comprising a support frame (8a) with a first opening (8c) for receiving tower segments (3), a second opening (8d) for receiving the lift cage (7) and a third opening (8e) between the first (8c) and second opening (8d), and at least two fastening arrangements (8f) for securing the securing assembly (8) to a tower segment (3) at a desired height, wherein the at least two fastening arrangements (8f) are arranged on a respective side of the third opening (8e).

## Description

### Technical field

The present invention relates to a tower system for performing work on an elongated structure and a method for erecting the same.

### Background

Wind turbine towers today require regular maintenance of its main components, such as rotor blades, gear boxes and generators. However, these components are often large and heavy, which poses an issue during both the assembly and the maintenance of the wind turbine towers. For example, the gear boxes may weigh between 20-45 tons, the generators may weigh between 15-30 tons and the rotor blades may weigh between 10-25 tons. Furthermore, the rotor blades are very long, they can be 80 meters, and are thus hard to handle; especially since they are designed to catch wind. Today, the most common solution for maintenance is to use large, heavy cranes that lift the components from the ground with long wires. One of the problems with these cranes is that they are highly sensitive to wind and cannot operate while the wind velocity exceeds certain limits, since the crane becomes too unstable and the wire might start to swing. This can result in stoppage of production for long periods of time, decreasing the profitability of the wind turbine towers. Additionally, the large size and weight of the cranes most commonly used today cause problems with transportation and assembly of the cranes. A large number of vehicles are required to transport the different parts of the cranes, and once the transportation is completed, the assembly of these parts takes a very long time to finish. All the problems mentioned above cause the assembly and the maintenance of the wind turbine towers to become expensive and time-consuming.

Cranes for assembling and maintaining wind turbine towers can also be used to assemble and perform maintenance on other elongated structures such as buildings or towers. The above problems are also applicable to such uses of cranes.

US 9,266,701 B2 discloses an enhanced stability crane, including a telescoping main support mast upon which a crane base resides. A boom projects upwardly from the crane base and a jib typically projects upwardly from the boom. The crane is adapted to have a load capacity of at least 72 tons and a maximum jib height of at least 80 meters. The disclosure addresses the issue of stability by using a clamping assembly which resides on the main support mast and is configured to attach to an existing structure adjacent to the crane. This clamping assembly enhances the stability of the mast. The size and weight of the enhanced stability crane is also reduced in comparison to the cranes most commonly used today. A problem with this solution is the limitation in height of the tower due to it having a telescopic main support mast. The clamping assemblies of the document are for grasping the tower structure. However, there are no details regarding how the clamping assemblies are secured to a place on the tower structure. Therefore, it is a problem that it is unclear how, when erecting the tower, the clamping assemblies are to be actuated and secured.

EP 3 434 639 A1 discloses a lifting assembly for elevating components to a wind turbine tower and a method for using the lifting assembly. A crane is mounted on a platform that is moveable along a tower comprising of stacked tower segments. The platform comprises a storage area for moving components of the wind turbine tower up and down. The crane lifts tower segments from the ground and attach them to the top of the tower to increase the height of the tower. The platform comprising the crane can then move higher on the newly added tower segment. The solution of EP 3 434 639 A1 comprises a securing assembly adapted to fixedly connect the tower to the wind turbine tower so to prevent the tower from swaying. The securing assembly may comprise a plurality of securing devices configured to clamp the tower of the wind turbine tower. A problem with this solution is that is takes time to assembly. There is also no solution to how to move the platform with the crane past the securing assembly which leads to a non-flexible solution where the platform can be moved along the height of the tower but not pass the securing assembly.

There is a need for a system for performing work on elongated structures, which is faster to assemble, can provide a high tower and is effective in use.

### Summary

It is an aim of the present invention to at least partly overcome the above problems, and to provide an improved tower system performing work on an elongated structure and a method for erecting the tower system.

This aim is achieved by a device as defined in claim 1 and the method of claim 9.

The disclosure provides a tower system, performing work on an elongated structure. The tower system comprises tower segments, arranged to be stacked to form an elongated vertical tower with an adjustable height depending on the number of tower segments, a base frame, arranged to jack up the tower segments and to stack tower segments from below, a jib arranged in a top part of the vertical tower for lifting components of the elongated structure, a lift cage, for transporting people, wherein one side of the lift cage is movably attached to a side of the vertical tower, the lift cage being arranged vertically moveable along the height of the vertical tower, one or more securing assembly comprising a support frame and a fastening module for securing the vertical tower to the elongated structure, the support frame comprising a first opening for receiving tower segments, a second opening for receiving the lift cage and a third opening between the first and second opening to allow the lift cage to be received in the second opening when it is movably attached to the vertical tower and the vertical tower is received in the first opening, and at least two fastening arrangements for securing the securing assembly to a tower segment at a desired height, wherein the at least two fastening arrangements are arranged such that the third opening is prevented from widening. The above provides a tower system that is fast to assemble. The jacking up from below ensures that tower segments do not have to be lifted when assembling the vertical tower. Lifting tower segments is time consuming because they must be lifted slowly to ensure that they do not hit anything on the way up. Jacking up of tower segments also ensures that the height of the vertical tower is very flexible. A higher tower simply requires more tower segments. The tower system is also more secure because a way to transport people up and down the tower is provided while still having a securing assembly to secure the tower system to the elongated structure. There is no need for a user to climb inside the tower to reach the top. This also leads to a faster system because it is faster for the people operating the tower system to reach different locations along the tower height. The fact that the fastening arrangements are arranged on opposite sides of the third opening also ensures that a person being transported in the lift cage can reach the fastening arrangements from the lift cage when the lift cage is in the second opening. The person in the lift cage can thus secure the fastening arrangements and/or perform maintenance. A further advantage is that a person in the lift cage can reach other parts of the securing assembly when the lift cage is located in the second opening and thus securely perform other operations and/or maintenance on it.

According to some aspects, the lift cage comprises a lifting arrangement arranged for moving the securing assembly along the tower height. In other words, there is no need for a specific arrangement for moving the securing assembly along the height of the vertical tower. Also, since a person can be present in the lift cage while performing the movement, the person in the lift cage has a close viewpoint for the move which ensures good safety when moving a securing assembly.

According to some aspects, the lifting arrangement comprises two beams, the two beams being moveable between a retracted position and an extended position, the two beams being arranged such that they, in the extended position, protrude on opposite sides of the lift cage and on sides different from the side moveably attached to the side of the tower, wherein a top side of the beams are arranged to engage a bottom side of the securing assembly in the extended position. This is a simple and robust way of providing a lifting arrangement on the lift. It is also design which allows for a fast way of switching between a position where the lift cage functions as a lift cage for people and a lift cage which functions as a lift for a securing assembly; the beams are just extended or retracted.

According to some aspects, the lift cage comprises a wire attachment arrangement for attaching a wire and the tower system comprises a tower segment jib for moving the lift cage along the height of the vertical tower with a wire arranged to be attached to the wire attachment arrangement. Alternatively, the jib arranged in a top part of the vertical tower moves the lift cage with a wire connected to the wire attachment arrangement. However, it may be advantageous that the jib is free to lift other components at the same time as the lift cage is moving.

According to some aspects, the base frame has four sides arranged in a rectangular shape and defining a space for the tower segments inside the base frame, and the base frame having a bottom side which is facing ground when the base frame is in use, wherein the base frame comprises a fixed bottom part arranged on the side of the base frame associated with the bottom side, a moveable rectangular lifting frame having a first base frame opening for feeding tower segments vertically, the lifting frame comprising holding arrangements for holding tower segments in a fixed position relative the lifting frame, a frame lifting arrangement, arranged to move the lifting frame relative the fixed bottom part between a raised position and a lowered position and a second base frame opening, arranged in one of the four sides, to allow the tower segments to move to and from the space when the lifting frame is in its raised position. The tower segments may thus be jacked up by pushing the vertical tower upwards with the lifting frame and then adding tower segments from below by inserting them through the second base frame opening. An effective feeding of tower segments from the side of the base frame is provided.

According to some aspects, an inner surface of the first opening of the support frame comprises rollers for assisting in moving the securing assembly relative the vertical tower. When moving the securing assembly, there may be a pulling power that causes rotation of the securing assembly. The rollers assist in preventing the securing assembly from getting caught up on the tower segments and ensures that is slides smoothly along the vertical tower.

According to some aspects, one tower segment comprises a blade lifting jib with a wire arranged to assist the jib arranged in a top part of the vertical tower in lifting wind turbine blades. Lifting wind turbine blades is problematic because the design of the blades is made to catch wind. Having a blade lifting jib in one of the tower segments is advantageous because the tower segment can be installed like all other tower segments; by jacking them up. The blade lifting jib may thus be preinstalled in a tower segment and is jacked up in the tower like any other tower segment. The installation of a blade lifting jib in the vertical tower is thus very fast and simple. The blade lifting jib can then be used in cooperation with the jib to lift blades. The blades are thus lifted at two places which is more secure for lifting a large blade. The blade lifting jib may also be used to move the lift cage with the wire attachment arrangement.

According to some aspects, one tower segment comprises an electric generator for powering at least one wire reel. Having an electric generator in one of the tower segments is advantageous because the tower segment can be installed like all other tower segments; by jacking them up. The electric generator may thus be preinstalled in a tower segment and is jacked up in the tower like any other tower segment. The installation of a n electric generator in the vertical tower is thus very fast and simple.

The disclosure provides a method for erecting a tower system for performing work on an elongated structure. The tower system being a tower system as defined in any of the preceding claims. The method comprises arranging the base frame in a desired position of the tower system, arranging at least one securing assembly on top of the base frame, with the first opening aligned with the tower segments to be jacked up, jacking up tower segments with the base frame for forming the elongated vertical tower, arranging a jib on the uppermost tower segment, and fastening the securing assembly to a tower segment using the fastening arrangement so that the securing assembly follows the tower segment upwards when the jacking up continues. The method allows for fast and non-complicated assembly of the vertical tower. It also provides good safety since no parts of the vertical tower needs to be lifted to high altitudes.

According to some aspects, the method comprises adjusting the height of the securing assembly by detaching the fastening arrangement and moving the securing assembly using the lifting arrangement of the lift. The securing assemblies can thus be moved along the height of the tower at any time. The system is thus flexible in that it allows for the securing assemblies to be moved as the vertical tower becomes higher.

According to some aspects, the tower system comprises at least two securing assemblies and wherein at least one securing assembly is secured to a tower segment using the fastening arrangement when the vertical tower reaches a predetermined height. In other words, safety is increased because there is always at least one securing assembly fastened to the vertical tower.

### Brief description of the drawings

The invention will now be explained more closely by the description of different embodiments of the invention and with reference to the appended figures.
Fig. 1 shows an example tower system next to a wind turbine tower, the wind turbine tower being an example elongated structure.
Fig. 2 shows an example securing assembly in a zoomed in view where example fastening arrangements are visible.
Fig. 3 shows an example base frame for jacking up tower segments.
Fig. 4 shows an example of a lift cage moving a securing arrangement with a lifting arrangement.
Fig. 5 shows an example lift cage which is being moved by a jib with a winch in a tower segment. A tower segment comprising an electric generator is also visible.
Fig. 6 shows an example lift cage with a lifting arrangement arranged on the underside of the lift. In the figure, the lifting arrangement is retracted.
Fig. 7 shows an example lift cage with a lifting arrangement arranged on the underside of the lift. In the figure, the lifting arrangement is extracted.
Fig. 8 shows a block diagram over an example method for erecting a tower system.

### Detailed description

Aspects of the present disclosure will be described more fully hereinafter with reference to the accompanying drawings. The devices and methods disclosed herein can, however, be realized in many different forms and should not be construed as being limited to the aspects set forth herein. Like numbers in the drawings refer to like elements throughout.

The terminology used herein is for the purpose of describing particular aspects of the disclosure only and is not intended to limit the invention. As used herein, the singular forms "a", "an" and "the" are intended to include the plural forms as well, unless the context clearly indicates otherwise.

Unless otherwise defined, all terms (including technical and scientific terms) used herein have the same meaning as commonly understood by one of ordinary skill in the art to which this disclosure belongs.

The term jack up or jacking up here means to use a device, in this disclosure a base frame, for lifting a heavy body, in this disclosure tower segments.

The term stack or stacking here means: to arrange the tower segments one on top of another. In other words, the tower segment are stacked, meaning that they are arranged one on top of another to form a vertical tower. To stack from below, accordingly, means to arrange tower segments on top of each other by adding tower segments below the lowest tower segment in the tower.

The term jib is defined as the projecting arm of a crane.

The term wire to include all types of wires, for example, metallic and synthetic ropes.

The term lift cage is interchangeable with the term elevator cage.

The term elongated structure is used for any type of structure that may require the need of a crane or tower system for building or maintaining it. Examples of elongated structures include any type of buildings, wind turbine towers, water towers and masts .

A rectangle is a quadrilateral with four right angles. In other words, an equiangular quadrilateral. The adjacent sides may be of unequal or equal length, i.e. a square.

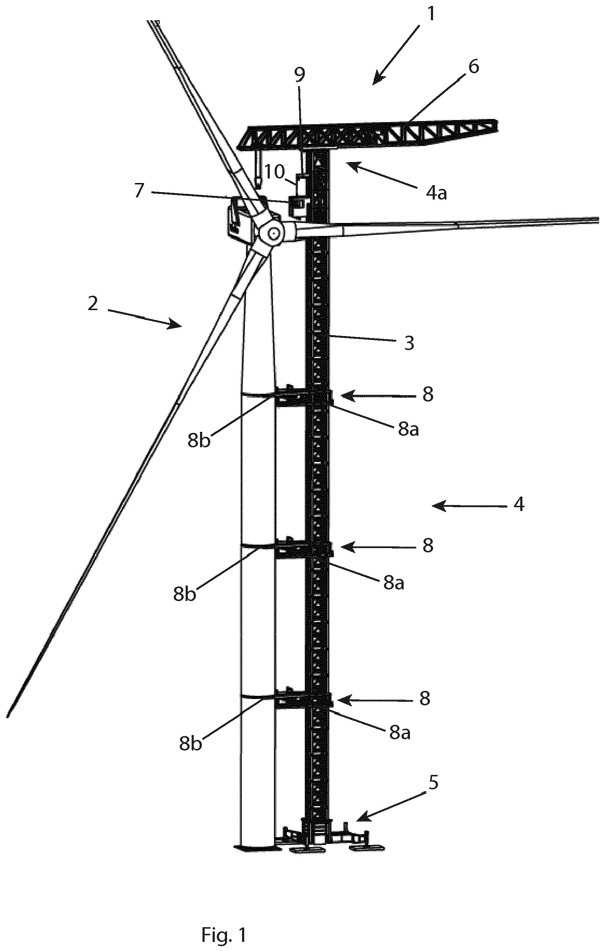

Figure 1 shows an example tower system 1 next to a wind turbine tower 2. The tower system 1 of the disclosure is for performing work on an elongated structure 2. In figure 1, the elongated structure 2 is thus exemplified with a wind turbine tower 2. The elongated vertical tower 4 is formed by stacked tower segments 3. The vertical tower 4 in the example of figure 1 is secured to the elongated structure 2 with three securing assemblies 8 that attach to the elongated structure 2. On top of the tower, there is arranged a jib 6 for lifting parts to the elongated structure 2 and at the bottom is a base frame 5 for jacking the tower to stack tower segments 3 from below and for stabilizing the tower at its base. A lift cage 7, is arranged for transporting people up and down the vertical tower.

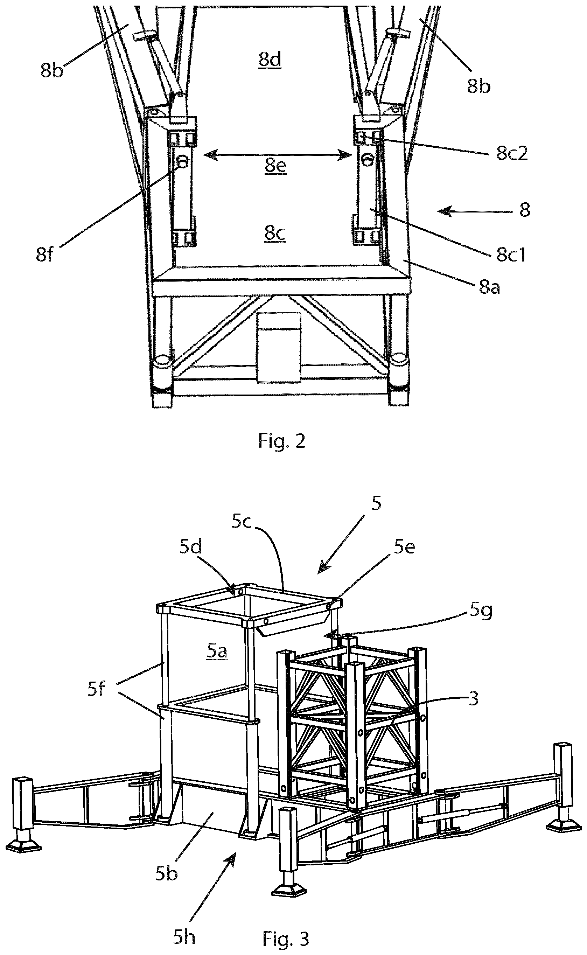

Figure 2 shows an example securing assembly 8 in a zoomed in view where example fastening arrangements 8f are visible. The fastening arrangements 8f are to secure the securing assembly 8 to a tower segments 3 of the vertical tower 4.

Again, the tower system 1 comprises tower segments 3, arranged to be stacked to form an elongated vertical tower 4 with an adjustable height depending on the number of tower segments 3. In other words, it is up to the user of the tower system 1 to decide how high the vertical tower 4 should be. The more tower segments 3, the higher the tower. The tower segments 3 comprises for example lattice tower segments 3. Lattice tower segments 3 are relatively light and also minimizes the amount of wind getting caught on the tower segment. The size of the tower segments 3 depends on the size of the intended vertical tower 4 and way of transportation. Higher tower segments 3 increase the speed of assembling the vertical tower 4 but are also harder to handle. The tower segments 3 are for example between 1 and 3.5 meter high.

The tower system 1 comprises a base frame 5, arranged to jack up the tower segments 3 and to stack tower segments 3 from below. An example base frame is illustrated in figure 3. In other words, the tower segments 3 are hoisted from below to raise them and insert another tower segment 3 from below. Systems for jacking for example overhead line towers and wind turbine tower are known in the art.

An example base frame 5 comprises four sides arranged in a rectangular shape and defining a space 5a for the tower segments 3 inside the base frame 5. The example base frame 5 has a bottom side 5h which is facing ground when the base frame 5 is in use. The example base frame 5 comprises a fixed bottom part 5b arranged on the side of the base frame 5 associated with the bottom side 5h and a moveable rectangular lifting frame 5c having a first base frame opening 5d for feeding tower segments 3 vertically. In other words, the base frame 5 has a part which is fixed relative the ground it is standing on and the lifting frame 5c is movable relative the bottom part for hoisting the tower segments 3. The lifting frame 5c comprises holding arrangements 5e for holding tower segments 3 in a fixed position relative the lifting frame 5c. The holding arrangements 5e are for example moveable bars in the lifting frame 5c that are moveable to engage holes in the tower segments 3 for holding the tower segments 3 in place relative the lifting frame 5c. The bars engage the holes horizontally, i.e. perpendicular to the longitudinal axis of the vertical tower 4 because the lifting frame 5c is to carry the weight of the vertical tower 4 in a vertical direction.

The example base frame 5 comprises a frame lifting arrangement 5f, arranged to move the lifting frame 5c relative the fixed bottom part 5b between a raised position and a lowered position. The frame lifting arrangement 5f comprises for example hydraulic, pneumatic or mechanical pistons arranged in the corners of the four sides, the pistons being attached to the fixed bottom part 5b and to the lifting frame 5c such that it moves the lifting frame 5c by extending and receding. A mechanical piston is for example a screw jack. Thus, there are several ways to perform the jacking. To have pistons arranged in all four corners facilitates lifting the tower segments 3 more evenly.

The example base frame 5 comprises a second base frame opening 5g, arranged in one of the four sides, to allow the tower segments 3 to move to and from the space 5a when the lifting frame 5c is in its raised position. The tower segments 3 may thus be jacked up by pushing the vertical tower 4 upwards with the lifting frame 5c and then adding tower segments 3 from below by inserting them through the second base frame opening 5g. An effective feeding of tower segments 3 from the side of the base frame 5 is provided.

The jacking up from below ensures that tower segments 3 do not have to be lifted by a crane when assembling the vertical tower 4. Lifting tower segments 3 is time consuming because they must be lifted slowly to ensure that they do not hit anything on the way up. Jacking up tower segments 3 also ensures that the height of the vertical tower 4 is very flexible. A higher tower simply requires more tower segments 3.

The tower system 1 comprises a jib 6 arranged in a top part 4a of the vertical tower 4 for lifting components of the elongated structure 2. The jib 6 may be any kind of jib 6 capable of lifting components to the elongated structure 2 and for arranging in a top part 4a of a vertical tower 4.

The tower system 1 comprises a lift cage 7, for transporting people, wherein one side of the lift cage 7 is movably attached to a side of the vertical tower 4. The lift cage 7 is arranged vertically moveable along the height of the vertical tower 4. The lift cage 7 may be any kind of lift cage 7 for vertically moving along the height of a vertical tower 4. Providing a lift cage that is capable of moving along the side of a vertical tower is known in the art and will not be explained further. It is to be understood that the side of the vertical tower is adapted to movably hold the lift. The lift cage 7 may comprise a lifting arrangement 7a arranged for moving the securing assembly 8 along the tower height. In other words, in this case, there is no need for a specific arrangement for moving the securing assembly 8 along the height of the vertical tower 4. Also, since a person can be present in the lift cage 7 while performing the movement, the person in the lift cage 7 has a close viewpoint for the move which ensures good safety when moving a securing assembly 8.

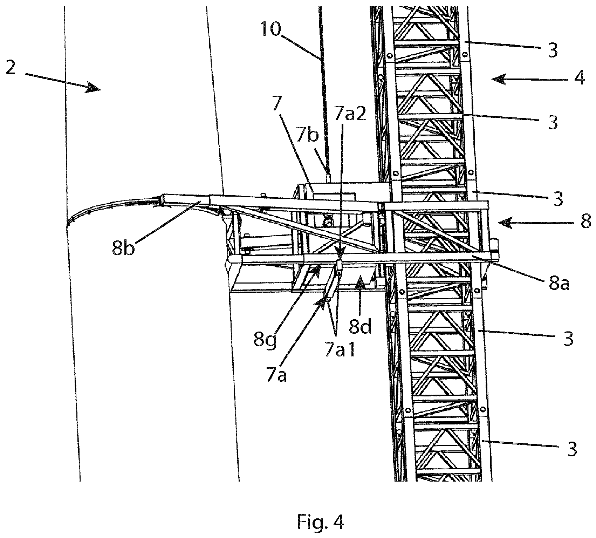

Figure 4 shows an example of a lift cage 7 moving a securing arrangement with a lifting arrangement 7a. In the illustrated example, the lifting arrangement 7a is retractable and extendable, and, in the figure, the lifting arrangement 7a is in the extended position where it can lift the securing assembly 8. The lifting arrangement 7a is, for example, two arms comprising telescopic metal beams 7a1.

It can be seen in figure 4 that the lift cage 7 can pass the securing assembly 8 through an opening 8d when the lifting arrangement 7a is retracted. The example lifting arrangement 7a, illustrated in figure 4, comprises two beams 7a1, the two beams 7a1 being moveable between a retracted position and an extended position. The two beams 7a1 being arranged such that they, in the extended position, protrude on opposite sides of the lift cage 7 and on sides different from the side moveably attached to the side of the tower. In figure 4, the beams 7a1 are extended and are engaging the underside of the securing assembly 8. The two beams may also comprise four beams and be arranged with two beams on each of the opposite sides of the lift cage. If there are four beams 7a1, the two beams on each side are arranged with a distance between them.

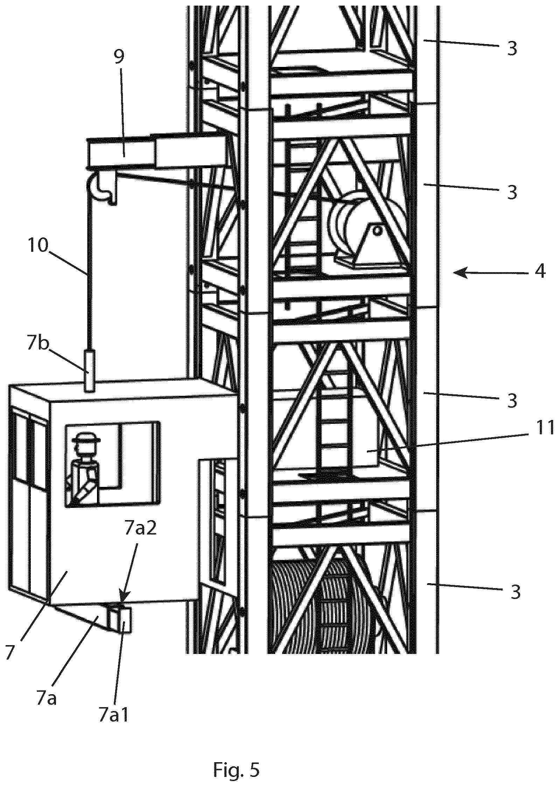

The lift cage 7 comprises, for example, a wire attachment arrangement 7b for attaching a wire 10 and the tower system 1 comprises a tower segment jib 9 for moving the lift cage 7 along the height of the vertical tower 4 with a wire 10 arranged to be attached to the wire attachment arrangement 7b. A wire reel on the inside of a tower segments 3 may be used for reeling the wire 10. Alternatively, the jib 6 arranged in a top part 4a of the vertical tower 4 moves the lift cage 7 with a wire 10 connected to the wire attachment arrangement 7b. However, it may be advantageous that the jib 6 is free to lift other components at the same time as the lift cage 7 is moving. Figure 5 shows an example lift cage 7 which is being moved by a tower segment jib 9 in a tower segment. A tower segments 3 comprising an electric generator 11 is also visible. A wire reel is also visible in the example of figure 5.

The wire attachment arrangement 7b may be any kind of wire attachment arrangement 7b suitable for attaching the lifting wires of a lift. The wire attachment arrangement 7b is for example a loop where the wire 10 can be attached. It should be noted that the illustrated wire attachment arrangement 7b in the figures is only to illustrate an example of a wire attachment arrangement 7b.

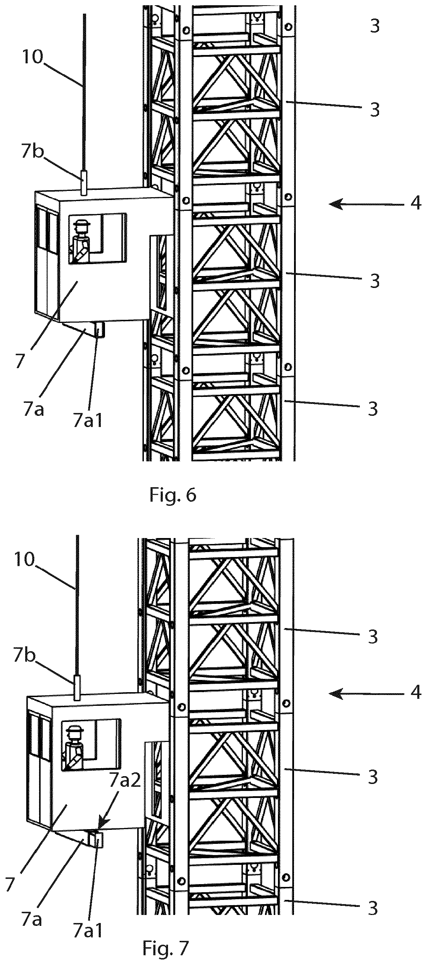

Figure 6 shows an example lift cage 7 with a lifting arrangement 7a arranged on the underside of the lift. In the figure, the lifting arrangement 7a is a telescopic beam which is retracted.

Figure 7 shows an example lift cage 7 with a lifting arrangement 7a arranged on the underside of the lift. In the figure, the lifting arrangement 7a is a telescopic beam which is extended.

In the examples of figures 4 to 7, the top side 7a2 of the beams 7a1 are arranged to engage a bottom side 8g of the securing assembly 8 in the extended position. This is a simple and robust way of providing a lifting arrangement 7a on the lift. It is also a design which allows for a fast way of switching between a position where the lift cage 7 functions as a lift cage 7 for people and a lift cage 7 which functions as a lift cage 7 for a securing assembly 8; the beams 7a1 are just extended or retracted.

Alternatives to telescopic beams 7a1 are, for example, foldable beams, i.e. beams that fold to the sides of the lift cage 7 rather than being retracted, or moveable hook arrangements or the like.

The at least one securing assembly 8 comprises a support frame 8a and a fastening module for securing the vertical tower 4 to the elongated structure 2. In figure 1, the tower system 1 has three securing assemblies 8 for securing the vertical tower 4 to the elongated structure 2. The number of securing assemblies 8 depends on the height of the vertical tower 4. A lower tower may require only one or two securing assemblies 8 and a higher tower may require four or five. As can be seen in the example of figure 4, the fastening module comprises arms 8b for clamping the elongated structure 2 from two sides such that the securing assembly 8 holds the vertical tower 4 in place relative the elongated structure 2. In cases where the elongated structure 2 is not a wind turbine tower or another, relatively slim, tower, the fastening module may comprise of another means for fastening the securing assembly to the structure and thus securing the vertical tower 4 to the structure 2. The means for fastening is for example a structure for screwing the securing assembly to the elongated structure 2.

It should be noted that the fastening module may be exchangeable such that the securing assembly may be equipped with different fastening modules depending on what type of structure the elongated structure 2 is.

In case the fastening module comprises arms 8b for clamping an elongated structure, each arm of the securing assembly 8 may comprise an inner part and an outer part and the outer part of each arm may comprise at least one rope sliding element arranged to slidably hold a rope. The securing assembly 8 may thus comprise a rope attached to the support frame 8a for at least partly surrounding the elongate structure 2. The rope may be arranged via the rope sliding elements and a rope tightening device arranged on the support frame 8a. The rope is to apply a high contact force on the elongated structure 2 surface by tightening the rope. The rope sliding elements are thus guiding the rope to the outer parts of the arms 8b. The rope is thus slidably attached to the rope sliding elements at the outer part of the arms 8b. The rope can thus be used to assist the arms 8b in clamping the elongated structure 2. A tightening device is used to tighten the rope around the elongated structure 2 and thus more tightly securing the securing assembly 8 to the elongated structure 2. The rope can be seen in the example of figure 4.

As can also be seen in figures 2 and 4, the support frame 8a comprises a first opening 8c for receiving tower segments 3, a second opening 8d for receiving the lift cage 7 and a third opening 8e between the first 8c and second opening 8d to allow the lift cage 7 to be received in the second opening 8d when it is movably attached to the vertical tower 4 and the vertical tower 4 is received in the first opening 8c. In other words, the first opening 8c and second opening 8d are in connection to each other via the third opening 8e and together, the first, second and third opening 8e form a larger opening. The third opening 8e is required to allow the lift cage 7 to pass by a securing assembly 8 while both passing in the second opening 8d and being movably attached to the vertical tower 4 which is arranged in the first opening 8c.

At least two fastening arrangements 8f, for securing the securing assembly 8 to a tower segment 3 at a desired height, can be seen in figure 2. The at least two fastening arrangements 8f are arranged such that the third opening 8e is prevented from widening. In other words, the at least two fastening arrangements 8f are used to secure the securing assembly 8 to the vertical tower 4 when it is at a desired height of the vertical tower 4. The at least two fastening arrangements 8f have a second function; they make sure that the support frame 8a is not deformed around the third opening 8e by forces acting on the securing assembly 8, i.e. the at least two fastening arrangements 8f prevents the third opening from changing shape. Such forces being for example wind or forces from when clamping the elongated structure 2 with arms 8b. The fastening arrangements 8f are, for example, arranged on opposite sides of the third opening 8e. A person being transported in the lift cage 7 can reach the fastening arrangements 8f from the lift cage 7 when the lift cage 7 is in the second opening 8d. The person in the lift cage 7 can thus secure the fastening arrangements 8f and/or perform maintenance. The fastening arrangements 8f may also be arranged on the two sides of the support frame 8a next to the side comprising the third opening 8e. In such a case, the fastening arrangement comprises an arrangement which prevents the support frame 8a from moving in any direction relative the tower segment 3.

The tower system 1 is secure because a way to transport people up and down the tower is provided while still having a securing assembly 8 to secure the tower system 1 to an elongated structure 2. There is no need for a user to climb inside the tower to reach the top. This also leads to a faster system because it is faster for the people operating the tower system 1 to reach different locations along the tower height.

A further advantage with that the lift cage 7 can pass the securing assembly 8 in the second opening 8d is that a person in the lift cage 7 can reach other parts of the securing assembly 8 when the lift cage 7 is located in the second opening 8d and thus securely perform other operations and/or maintenance on it.

As can be seen in the example of figure 2, an inner surface 8c1 of the first opening 8c of the support frame 8a may comprise rollers 8c2 for assisting in moving the securing assembly 8 relative the vertical tower 4. Rollers may be fitted in the vicinity of each corner of the first opening 8c. When moving the securing assembly 8, there may be a pulling power that causes rotation of the securing assembly 8. The rollers 8c2 assist in preventing the securing assembly 8 from rotating and facilitates that is slides smoothly along the vertical tower 4. In figure 2, eight rollers 8c2 are visible; four on each side of the third opening 8e whereof two are arranged on a top part and two on a bottom part. There may also be eight additional rollers 8c2 on the opposite side of the inner surface 8c1 of the first opening 8c, i.e. on a backside the side of the support frame 8a closest in view in figure 2. The number of rollers 8c2 may also be more or less than illustrated. For example, instead of having two rollers 8c2 next to each other, there may be one roller at each location; totaling of 8 rollers 8c2 on the inner surface 8c1 of the first opening 8c. Rollers 8c2 may also be arranged on the two other sides. An alternative to using rollers is for example to use a sliding surface on the inner surface 8c1 of the first opening 8c.

One tower segment 3 may comprise a blade lifting jib 9 with a wire 10 arranged to assist the jib 6 arranged in a top part 4a of the vertical tower 4 in lifting wind turbine blades. In such a case, the elongated structure is a wind turbine tower. Lifting wind turbine blades is problematic because the design of the blades is made to catch wind. Having a blade lifting jib 9 in one of the tower segments 3 is advantageous because the tower segments 3 can be installed like all other tower segments 3; by jacking them up. The blade lifting jib 9 may thus be preinstalled in a tower segments 3 and is jacked up in the tower like any other tower segment. The installation of a blade lifting jib 9 in the vertical tower 4 is thus very fast and simple. The blade lifting jib 9 can then be used in cooperation with the jib 6 to lift blades. The blades are thus lifted at two places which is more secure for lifting a large blade. The blade lifting jib 9 may also be used to move the lift cage 7 in the wire attachment arrangement 7b. The crane 9 shown in figure 5 may be the blade lifting jib 9 which may be used to move the lift. An alternative blade lifting jib may be a similar crane 9 as the one illustrated in figure 5 but arranged in another direction. The crane 9 in figure 5 is arranged on a side of the vertical tower 4 which is facing the elongated structure 2. It may be advantageous that the blade lifting jib is protruding from the vertical tower 4 in one of the two sides adjacent to the side facing the elongated structure 2 because the blades of a wind turbine tower 2 will be arranged on one of those two sides as can be seen in figure 1.

As previously mentioned in relation to figure 5, one tower segments 3 may comprise an electric generator 11 for powering at least one wire reel. Having an electric generator 11 in one of the tower segments 3 is advantageous because the tower segments 3 can be installed like all other tower segments 3; by jacking them up. The electric generator 11 may thus be preinstalled in a tower segments 3 and is jacked up in the tower like any other tower segment. The installation of an electric generator 11 in the vertical tower 4 is thus very fast and simple. The electric generator 11 is for example used for powering a tower segment jib 9 in another tower segment. The electric generator 11 may also be used to turn the jib 6 and/or powering the movement of the wire of the jib 6.

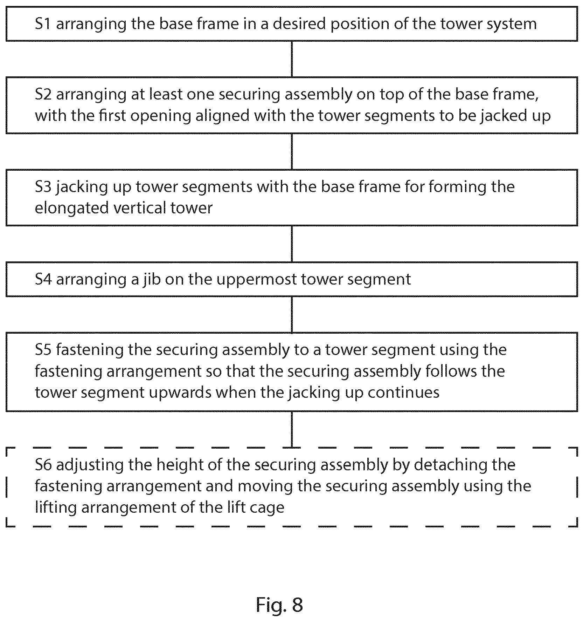

The disclosure provides a method for erecting a tower system 1 for performing work on an elongated structure 2. The tower system 1 being a tower system 1 as defined above. A block diagram over the method can be seen in figure 8.

The method comprises arranging the base frame 5 in a desired position of the tower system 1. The desired position being, in general, next to an elongated structure 2 that is to be maintained or built. The method comprises arranging at least one securing assembly 8 on top of the base frame 5, with the first opening 8c aligned with the tower segments 3 to be jacked up. The securing assembly 8 may be arranged on top of the base frame 5 before adding any tower segments 3 and when the base frame 5 is used to jack up tower segments 3, they will pass through the first opening 8c of the securing assembly 8. The securing assembly 8 may then be attached to the desired tower segments 3 with the at least two fastening arrangements 8f as it passes through the first opening 8c. Alternatively, the at least one securing assembly 8 is pre-attached to a tower segment 3 with the at least two fastening arrangements 8f and the set of the securing assembly 8 and tower segments 3 is lifted on to the base frame 5 with, for example, a crane.

The method comprises jacking up tower segments 3 with the base frame 5 for forming the elongated vertical tower 4. Jacking has been explained above.

The method comprises arranging a jib 6 on the uppermost tower segment. The jib 6 may be arranged on the uppermost tower segments 3 when suitable. For example, the jib 6 is arranged on the uppermost tower segments 3 of the vertical tower 4 before the tower is too high to reach with a crane available on site.

The method comprises fastening the securing assembly 8 to a tower segments 3 using the fastening arrangements 8f so that the securing assembly 8 follows the tower segments 3 upwards when the jacking up continues. In other words, the fastening arrangements 8f are engaged so that the at least one securing assembly 8 rises with the vertical tower 4. When a securing assembly 8 is at a desired height relative the wind turbine tower 2, the fastening module for securing the vertical tower (4) to the elongated structure are engaged to fasten the securing assembly 8 relative the elongated structure 2. The fastening arrangements 8f may then be disengaged so that the securing assembly 8 is fixed relative the elongated structure 2, but the vertical tower 4 can continue to rise by jacking tower segments 3 from below. The tower segments 3 then slide through the securing assembly 8 via the first opening 8c.

The method allows for fast and non-complicated assembly of the vertical tower 4. It also provides good safety since no parts of the vertical tower 4 needs to be lifted to high altitudes.

The method may also comprise adjusting the height of the securing assembly 8 by detaching the fastening arrangement and moving the securing assembly 8 using the lifting arrangement 7a of the lift. The securing assemblies 8 can thus be moved along the height of the tower at any time. The system is thus flexible in that it allows for the securing assemblies 8 to be moved as the vertical tower 4 becomes higher. The lifting arrangement 7a of the lift cage 7 has been previously described.

The tower system 1 according to above can be made high, for example over 200 meters high. In such a case it may be advantageous to have more than one securing assembly 8 for securing the vertical tower 4 to the elongated structure 2. The tower system 1 may thus comprise at least two securing assemblies 8 and wherein at least one securing assembly 8 is secured to a tower segments 3 using the fastening arrangements 8f when the vertical tower 4 reaches a predetermined height. In other word, when the vertical tower 4 has reached a predetermined height, there is always at least one securing assembly 8 that is attached to the vertical tower 4 using the fastening arrangements 8f. It may also be that at least one of the securing assemblies 8 should be secured to the elongated structure 2 with the fastening module. The predetermined height may vary with the dimensions of the vertical tower 4, wind conditions and total height of the tower. In other words, security is increased because there is always at least one securing assembly 8 fastened to the vertical tower 4 and/or the elongated structure 2.

The present invention is not limited to the embodiments disclosed but may be varied and modified within the scope of the following claims. For example, there may be several alternative ways to jack up tower segments 3.

### List of references:

- 1.: Tower system
- 2.: Elongated structure
- 3.: Tower segment
- 4.: Vertical tower
a. Top part
- 5.: Base frame
a. Space
b. Fixed bottom part
c. Lifting frame
d. First base frame opening
e. Holding arrangements
f. Frame lifting arrangement
g. Second base frame opening
h. Base frame bottom side
- 6.: Jib
- 7.: Lift cage
a. Lifting arrangement
   1. Beam
   2. Topside
b. Wire attachment arrangement
- 8.: Securing assembly
a. Support frame
b. Fastening module
c. First opening
   1. Inner surface
   2. Rollers
d. Second opening
e. Third opening
f. Fastening arrangements
g. Bottom side
- 9.: Tower segment jib/blade lifting jib
- 10.: Wire
- 11.: Electric generator

## Claims

1. A tower system (1), for performing work on an elongated structure (2), the system comprising:
- tower segments (3), arranged to be stacked to form an elongated vertical tower (4) with an adjustable height depending on the number of tower segments (3),
- a base frame (5), arranged to jack up the tower segments (3) and to stack tower segments (3) from below,
- a jib (6) arranged in a top part (4a) of the vertical tower (4) for lifting components of the elongated structure (2),
- a lift cage (7), for transporting people, wherein one side of the lift cage (7) is movably attached to a side of the vertical tower (4), the lift cage (7) being arranged vertically moveable along the height of the vertical tower (4),
- a securing assembly (8) comprising a support frame (8a) and a fastening module (8b) for securing the vertical tower (4) to the elongated structure (2), the support frame (8a) comprising a first opening (8c) for receiving tower segments (3), a second opening (8d) for receiving the lift cage (7) and a third opening (8e) between the first (8c) and second opening (8d) to allow the lift cage (7) to be received in the second opening (8d) when it is movably attached to the vertical tower (4) and the vertical tower (4) is received in the first opening (8c),
- at least two fastening arrangements (8f) for securing the securing assembly (8) to a tower segment (3) at a desired height, wherein the at least two fastening arrangements (8f) are arranged such that the third opening (8e) is prevented from widening.

2. The tower system (1) according to claim 1, wherein the lift cage (7) comprises a lifting arrangement (7a) arranged for moving the securing assembly (8) along the tower height.

3. The tower system (1) according to claim 2, wherein the lifting arrangement (7a) comprises two beams (7a1), the two beams (7a1) being moveable between a retracted position and an extended position, the two beams (7a1) being arranged such that they, in the extended position, protrude on opposite sides of the lift cage (7) and on sides different from the side moveably attached to the side of the tower, wherein a top side (7a2) of the beams (7a1) are arranged to engage a bottom side (8g) of the securing assembly (8) in the extended position.

4. The tower system (1) according to claim 2 or 3, wherein the lift cage (7) comprises a wire attachment arrangement (7b) for attaching a wire (10) and the tower system (1) comprises a tower segment jib (9) for moving the lift cage (7) along the height of the vertical tower (4) with a wire (10) arranged to be attached to the wire attachment arrangement (7b).

5. The tower system (1) according to any one of the preceding claims, wherein the base frame (5) has four sides arranged in a rectangular shape and defining a space (5a) for the tower segments (3) inside the base frame (5), and the base frame (5) having a bottom side (5h) which is facing ground when the base frame (5) is in use, wherein the base frame (5) comprises:
- a fixed bottom part (5b) arranged on the side of the base frame (5) associated with the bottom side (5h),
- a moveable rectangular lifting frame (5c) having a first base frame opening (5d) for feeding tower segments (3) vertically, the lifting frame (5c) comprising holding arrangements (5e) for holding tower segments (3) in a fixed position relative the lifting frame (5c),
- a frame lifting arrangement (5f), arranged to move the lifting frame (5c) relative the fixed bottom part (5b) between a raised position and a lowered position,
- a second base frame opening (5g), arranged in one of the four sides, to allow the tower segments (3) to move to and from the space (5a) when the lifting frame (5c) is in its raised position.

6. The tower system (1) according to any one of the preceding claims, wherein an inner surface (8c1) of the first opening (8c) of the support frame (8a) comprises rollers (8c2) for assisting in moving the securing assembly (8) relative the vertical tower (4).

7. The tower system (1) according to any one of the preceding claims, wherein one tower segment (3) comprises a blade lifting jib (9) with a wire (10) arranged to assist the jib (6) arranged in a top part (4a) of the vertical tower (4) in lifting wind turbine blades.

8. The tower system (1) according to any one of the preceding claims, wherein one tower segment (3) comprises an electric generator (11) for powering at least one wire reel.

9. A method for erecting a tower system (1) for performing work on an elongated structure (2), the tower system (1) being a tower system (1) as defined in any of the preceding claims, wherein the method comprises:
- arranging (S1) the base frame (5) in a desired position of the tower system (1),
- arranging (S2) at least one securing assembly (8) on top of the base frame (5), with the first opening (8c) aligned with the tower segments (3) to be jacked up,
- jacking up (S3) tower segments (3) with the base frame (5) for forming the elongated vertical tower (4),
- arranging (S4) a jib (6) on the uppermost tower segment, and
- fastening (S5) the securing assembly (8) to a tower segment (3) using the fastening arrangement (8f) so that the securing assembly (8) follows the tower segment (3) upwards when the jacking up continues.

10. The method according to claim 9, the tower system (1) being a tower system (1) as defined in claim 2, wherein the method comprises:
- adjusting (S6) the height of the securing assembly (8) by detaching the fastening arrangement (8f) and moving the securing assembly (8) using the lifting arrangement (7a) of the lift cage (7).

11. The method according to claim 9 or 10, wherein the tower system (1) comprises at least two securing assemblies (8) and wherein at least one securing assembly (8) is secured to a tower segment (3) using the fastening arrangements (8f) when the vertical tower (4) reaches a predetermined height.
